# EUROPEAN PATENT APPLICATION

(11) **EP 3 919 184 A1**
(43) Date of publication of application: **08.12.2021**
(21) Application number: 21177645.5
(22) Date of filing: 03.06.2021
(51) Int. Cl.: B05C 9/14, B05C 11/10, B29B 13/02, B27G 11/02

(54) **IMPROVED CART FOR STORING AND HEATING AT LEAST ONE GLUING DEVICE**

(30) Priority: 05.06.2020 IT 202000013375
(71) Applicant: SCM Group S.p.A., 47921 Rimini (RN) (IT)
(72) Inventor: GIANESINI, Nicolo', 47921 RIMINI (IT); PEGORARO, Raffaele, 47921 RIMINI (IT)
(74) Representative: Tiburzi, Andrea

(57) **Abstract**

The present invention relates to a Cart (1) for storing and heating at least one gluing device (2), wherein said gluing device (2) is of the type comprising a receptacle (21) containing a quantity of solid glue.

In particular, said cart (1) comprises a container (3) for containing said at least one gluing device (2) and a control system (S) to control the heating process of said quantity of glue contained in said gluing device on the bases of the temperature of said gluing device (2) and/or of a heating device (30) for heating the internal volume of said container (3).

## Description

The present invention relates to an improved cart for storing and heating at least one gluing device.

### Field of the invention

In particular, the invention relates to the structure of an improved cart comprising a container and designed to contain one or more gluing devices in said container and to allow the flow of an electric current in the gluing device and/or in a heating device, for heating the internal volume of said container (to be positioned inside said container) so that the quantity of glue contained in said gluing device is subjected to a heating process to allow the application of said quantity of glue on a workpiece, such as a panel made of wood or of another material.

The gluing device comprises a receptacle containing a quantity of solid glue and electric heating means for heating said quantity of solid glue, and the cart is equipped with a control system for controlling the glue heating process.

Said gluing device can be equipped with at least one roller for applying said quantity of glue on a workpiece or it can be without a roller.

In the following, the description will be directed to a cart in which a gluing device equipped with a roller is housed and the glue is used for the edge-banding of wooden panels.

However, the description should not be considered limited to this specific use.

### Prior Art

As is known, for finishing a panel made of wood or other material, edge-banding machines are used to edge-band the side surfaces of said panel, i.e. to apply a beading or an edge tape on said side surfaces.

In general, the panel edge-banding process involves a panel rectification step, in which the inaccuracies of a side surface of the panel are removed (for example an inaccuracy can be a quantity of excess material on the side surface of the panel), a step of applying a glue on said side surface, to glue an edge on said lateral surface, and a step of finishing said edge, by means of one or more machining tools (such as, for example, a rounder) according to the type of finishing.

In order that the glue is correctly applied on a side surface of the panel, it is essential that the glue is heated, i.e., reaches the melting temperature.

The melting temperature can change according to the type of glue.

The glue is a solid glue and is contained in a container of a gluing device (called "glue tank") and said gluing device can be removably coupled to the edge banding machine.

In particular, the container containing a quantity of glue is heated so that the glue reaches its melting temperature, such that the glue passes from a solid-state to a liquid state and is ready to be applied on the panel.

Once the glue is applied to the panel, the gluing device can be removed from the edge-banding machine to allow the cleaning of the container and, if necessary, insert into the container a further quantity of glue, different from the one used, for further applications.

The glue can be a hotmelt glue (whose melting temperature is typically 200 °C), preferably an EVA glue ("Ethylene Vinyl Acetate"), or a polyurethane glue (whose melting temperature is typically 140°).

The hotmelt glue is a reversible glue, i.e., a glue that can be heated several times without its chemical-physical characteristics being altered.

Unlike a thermo-fusible glue, polyurethane glue is a glue having a resistance greater than the hotmelt glue resistance.

Currently, regardless of the type of glue that is in the receptacle of the gluing device, there is no technical solution to check whether during the heating process the glue has reached the melting temperature (and therefore has gone from solid to liquid state), but it is necessary the presence of an operator, who checks the state of the glue.

In fact, a disadvantage is given by the fact that the operator has to periodically check the state of the glue, to prevent the glue from being subjected to a curing process and no longer usable.

In the case more gluing devices are arranged inside the cart, the operator has to check the state of the glue contained in the receptacles of the individual gluing devices, with the consequent waste of time.

A second disadvantage is given by the possibility that the glue is subjected to a curing process due to an operator's inattention.

### Scope of the invention

The scope of the invention is to overcome said disadvantages by providing an improved cart for storing at least one gluing device and for heating a quantity of glue contained in said gluing device, in which said cart has a simple structure and a low production cost and is designed to automate the heating process of said quantity of glue.

Further scope of the invention is to provide a cart designed to allow an operator remotely to control the heating process of said quantity of glue.

### Object of the invention

It is therefore specific object of the present invention a cart for storing and heating at least one gluing device, wherein said gluing device is of the type comprising a receptacle containing a quantity of solid glue, heating means for heating said quantity of glue, temperature detection means for detecting the internal temperature value of said gluing device, wherein said cart comprises:
- a container for containing said at least one gluing device;
- a first actuator to heat said gluing device and/or a second actuator to heat said container, wherein said second actuator is positioned inside said container;
- a control system comprising a logic control unit connected to said first actuator and/or to said second actuator; and said logic control unit is configured to activate/deactivate said first actuator and/or said second actuator.

In particular, said cart may comprise an electrical connection for connecting said heating means of said gluing device to a power supply network, and said first actuator comprises a switching device arranged on said electrical connection and configured to switch from an open state, wherein said switching device interrupts the passage of electric current from said power supply network to said heating means, in a closed state, wherein said switching device allows the passage of electric current from said power supply network to said heating means, and vice versa,

Said logic control unit may be configured to:
∘ acquire said internal temperature value of said gluing device, trough said temperature detection means,
∘ control the switching of said switching device so that the switching from said closed state to said open state is carried out on the basis of the temperature value acquired by said temperature detection means.

Said control system may comprise storage means in which at least one or more ranges of melting temperature values, each of which is associated with a respective type of glue, and/or one or more predetermined values of humidity and/or one or more predetermined temperature values are stored, and said logic control unit is connected or connectable to said storage means.

When one or more ranges of melting temperature values are stored in said storage means, said logic control unit may be configured to:
∘ select a range of melting temperature values associated with the glue contained in the gluing device,
∘ keep said switching device in said closed state until the value of said internal temperature falls within said range of melting temperature values associated to the glue contained in said gluing device.

With reference to the said second actuator, said second actuator may comprise a heating device for heating the internal volume of said container and in that said logic control unit is connected or connectable to said heating device.

Further, said cart may comprise further temperature detection means for detecting the internal temperature value of said container, wherein said further temperature detection means are arranged inside said container, and said logic control unit is connected or connectable to said further temperature detection means.

In particular, said logic control unit may be configured to:
∘ acquire the internal temperature value of said container, by means of said further temperature detection means,
∘ control the power supply of said heating device based on the temperature value acquired by said further temperature detection means.

More specifically, when one or more ranges of melting temperature values are stored in said storage means, said logic control unit may be configured to:
∘ select a range of melting temperature values associated with the glue contained in the gluing device,
∘ supply power to said heating device until the value of said internal temperature of said container falls within said range of melting temperature values associated to the glue contained in said gluing device.

According to a first aspect of the invention, said cart may comprise a motor connectable to a roller of said gluing device, and said logic control unit may be connected or connectable to said motor and configured to send a signal to said motor to rotate said motor in a first direction or in a second direction, opposite to said first direction, so that said roller rotate in said first direction or said second direction.

According to a second aspect of the invention, said cart may comprise a depression generation device for generating a depression inside said container, and said logic control unit may be connected or connectable to said depression generation device and configured to activate/deactivate said depression generation device.

According to a third aspect of the invention, said cart may comprise an inert gas supplying device for supplying at least one inert gas inside said container, and said logic control unit may be connected or connectable to said inert gas supplying device and configured to activate/deactivate said inert gas supplying device.

According to a fourth aspect of the invention, said cart may comprise humidity detection means for detecting a relative humidity value inside said container, arranged inside said container and said logic control unit may be connected or connectable to said humidity detection means. When one or more predetermined humidity values are stored in said storage means, said logic control unit may be configured to:
∘ acquire said relative humidity value from said humidity detection means,
∘ compare said relative humidity value with a predetermined humidity value, to verify if said relative humidity value is greater or less than said predetermined humidity value,
∘ when said relative humidity value is greater than said predetermined humidity value, increase the time of supplying said inert gas inside said container until said predetermined humidity value is reached, and when said relative humidity value is less than said predetermined humidity value, decrease the time of supplying said inert gas inside said container until said predetermined humidity value is reached.

Further, when one or more predetermined temperature values are stored in said storage means, said logic control unit is configured to:
∘ acquire a temperature value from said further temperature detection means,
∘ compare said temperature value with a predetermined temperature value to verify if said temperature value is greater than said predetermined temperature value,
∘ increase/decrease the time of supplying dry air inside said container until a predetermined humidity value is reached, based on the detected temperature value.

Advantageously, said control system may comprise a receiver module for receiving a command signal from a mobile electronic device and said logic control unit may be connected or connectable to said receiver module and is configured to acquire said command signal, so that said control system is remotely controlled through said mobile electronic device.

Further, when said gluing device is of the type comprising a first pneumatic cylinder for opening/closing a shutter in order to allow/prevent the passage of a quantity of glue from said receptacle to a roller of said gluing device and a second pneumatic cylinder for opening/closing a dispenser in order to adjust the quantity of glue that goes from said receptacle to said roller, said logic control unit may be configured to send a respective signal to said first pneumatic cylinder to open/close said shutter and to said second pneumatic cylinder to open/close said dispenser.

Finally, said cart may comprise a control panel provided with a plurality of buttons and/or display means for displaying at least data associated with the gluing device and/or data associated with the container and said control panel may be connected or connectable to said control system.

### List of drawings

The present invention will be now described, for illustrative but not limitative purposes, according to its preferred embodiments, with particular reference to the figures of the enclosed drawings, wherein:
figure 1 shows a gluing device, according to the prior art;
figure 2 is a perspective view of a cart according to the invention in the closed configuration, in which a gluing device is arranged on a support plane of said cart and said cart comprises a control system for controlling said cart;
figure 3 is a further perspective view of the cart of figure 2;
figure 4 is a partially sectional side view of the cart according to the invention, in which the cart is in a closed configuration and a gluing device and a heating device (for heating said container) are arranged inside a container, located inside a compartment of said cart, and in which the control system has been shown external to said cart for a better understanding of the structure of the control system;

In the various figures, similar parts will be indicated with the same numerical references.

### Detailed description of the invention

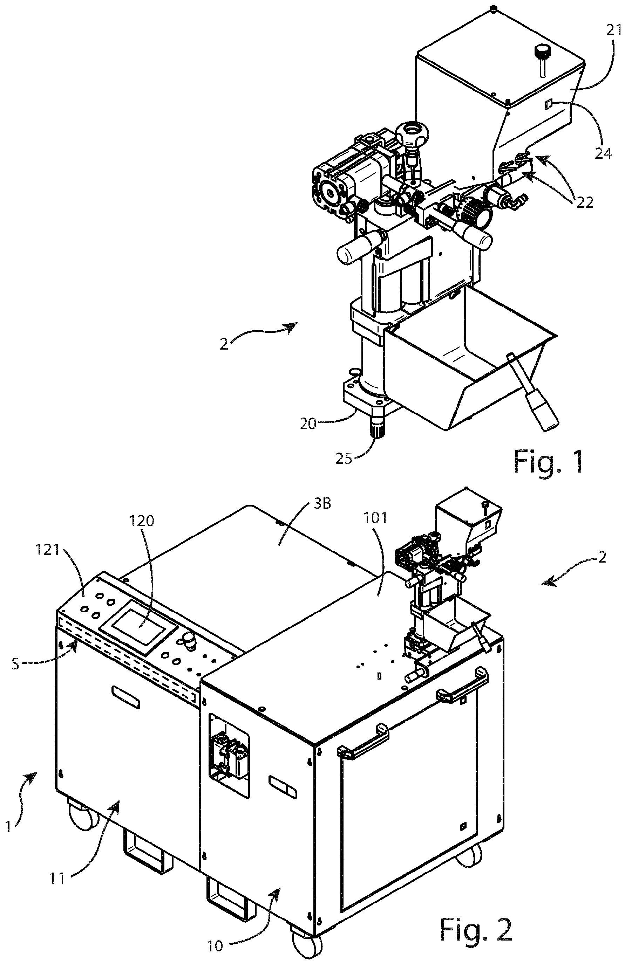

With particular reference to figures 2-4, an improved cart 1 for storing and heating at least one gluing device itself is described.

Figure 1 shows a gluing device 2, which is not an object of the invention.

However, it is necessary to mention some technical features of the gluing device 2 to explain the operation of the cart 1, object of the invention, with respect to said gluing device 2.

With reference to the gluing device 2, said gluing device 2 comprises a receptacle 21, containing a quantity of solid glue, heating means 22 for heating said quantity of glue, a roller 25 for applying the glue on a workpiece, such as, for example, a wooden panel, as well as temperature detection means 24 for detecting the internal temperature value of said gluing device 2.

In the embodiment that is described, said temperature detection means 24 are arranged in contact with a portion of the external surface of the gluing device 2.

In particular, said temperature detection means 24 contacts a portion of the gluing device 2 in correspondence with the receptacle 21 containing said quantity of glue.

However, said temperature detection means 24 may be internal to the gluing device 2, without departing from the scope of the invention.

In the embodiment that is described, the receptacle 21 has an opening, closed by a door.

The opening of the door allows the insertion of a quantity of glue in said receptacle 21.

The insertion of the glue inside the receptacle 21 can be a manual or an automated operation.

The shape of said receptacle 21 is preferably conical to ease the outflow of the glue (once the glue has reached a liquid state) downwards, i.e., towards the roller 25.

Said gluing device 2 has a substantially vertical development body, in which said receptacle 21 is arranged in the upper part of said body, and said roller 25 is arranged in the lower part of said body.

Said heating means 22 are arranged inside said gluing device 2 in such a way that, in use, the quantity of glue contained in the receptacle 21 is heated, causing the passage of said quantity of glue from a solid-state to a liquid state.

In the embodiment that is described, said heating means 22 are electric heating means.

In particular, in the embodiment that is described, said heating means 22 can comprise at least one electric cable for the flowing of an electric current.

However, said heating means 22 can be induction heating means, without departing from the scope of the invention.

Furthermore, said gluing device 2 comprises a first pneumatic cylinder to open/close a shutter, in order to allow/avoid the passage of a quantity of glue from the receptacle 21 to the roller 25, and a second pneumatic cylinder to open/close a dispenser, in order to adjust the quantity of glue, which goes from the receptacle 21 to the roller 25.

With reference to the cart 1, object of the invention, said cart 1 comprises a control system S for controlling the heating process of the quantity of glue contained in said gluing device 2.

Said control system S is included in a control panel 121 (which will be better described below) and said control panel 121 is connected or connectable to said control system S.

With reference to the cart 1, said cart 1 comprises a supporting unit 10 for supporting said at least one gluing device 2, when it is not necessary to heat a quantity of glue contained in the gluing device 2, and a storage and heating unit 11 to preserve said gluing device 2 and to heat the quantity of glue contained in the gluing device.

Said storage and heating unit 11 can be connected or connectable to said supporting unit 10 or arranged next to said supporting unit 10.

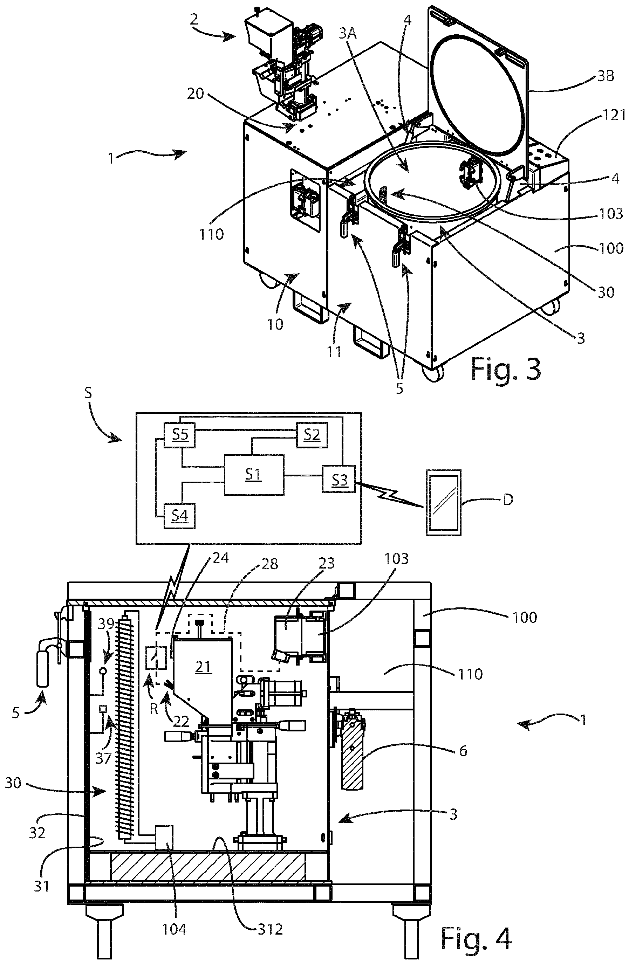

In the embodiment that is described, said supporting unit 10 and said storage and heating unit 11 are separated, as indicated by the solid line in figures 2 and 3, and arranged side by side.

With reference to the supporting unit 10, said supporting unit 10 comprises a supporting plane 101, for supporting said at least one gluing device.

In particular, said supporting plane 101 is equipped with at least one seat (not shown in the figures) for housing the roller 25 of said at least one gluing device 2, in which a portion of said roller 25 protrudes from a base 20 of said gluing device 2.

Furthermore, said supporting plane 101 is equipped with at least one blocking element 102, close to said at least one seat, for blocking said base 20 to said supporting plane 101.

With reference to the storage and heating unit 11, said storage and heating unit 11 comprises a container 3 (arranged inside of said storage and heating unit 11), for containing said at least one gluing device 2 and supplying said gluing device 2.

In particular, said container 3 is arranged inside a compartment 110 (open at the top) that is in said storage and heating unit 11.

With particular reference to said container 3, said container 3 has an opening 3A for inserting and extracting said at least one gluing device 2 in/from said container 3.

In the embodiment that is described, said container 3 is sized to contain two gluing devices 2, although just one of said gluing devices is shown.

However, said container 3 can be sized to receive any number of gluing devices 2.

For example, said container 3 can be sized to receive a single gluing device 2 or a number of gluing devices 2 greater than two.

Furthermore, in the embodiment that is described, said container 3 has a cylindrical section.

However, said container 3 can have any section, without departing from the scope of the invention.

Furthermore, the opening 3A of said container 3 is closed by a lid 3B.

In the embodiment that is described, said lid 3B is constrained to a frame 100 of the cart 1 by means of one or more hinges 4 (in the embodiment that is described, the lid 3B is constrained to the frame 100 by means of two hinges 4).

In particular, in the embodiment that is described, said lid 3B is sized to close not only the opening 3A of the container 3, but also the opening of the compartment 110 (in which said container 3 is arranged).

However, it is not necessary that said lid 3B is sized to close the opening of said compartment 110, but it is sufficient that it closes the opening 3A of the container 3.

Furthermore, said frame 100 is equipped with one or more blocking means 5 for blocking said lid 3B to the frame itself, in such a way that said container 3 is hermetically isolated from the external environment to avoid a quantity of air from entering the container.

In other words, any air exchange between the inside of the container and the external environment is avoided.

Said blocking means 5 comprise at least one blocking hook.

In the embodiment that is described, said blocking means 5 comprise two blocking hooks.

Advantageously, said container 3 can be thermally isolated from the external environment.

Furthermore, said container 3 comprises a power supply unit for supplying said gluing device 2, in which said power supply unit is connected or connectable to a power supply network (not shown), so as to cause the heating of the quantity of glue contained in the gluing device and the passage of said quantity of glue from a solid-state to a liquid state.

Said power supply unit comprises first power supply means, which can be coupled to a respective electric connector 23 of each gluing device 2.

Said first power supply means comprise a respective first electric power supply connector 103, which can be coupled to a respective electric connector 23 of each gluing device 2, so that, in use, the respective heating means 22 of the gluing devices 2 are powered.

In particular, each first electric power supply connector 103 is shaped to form a shape coupling with a respective electric connector 23 of each gluing device.

The container 3 has a first surface or internal surface 31 and a second surface or external surface 32.

In the embodiment that is described, each first electric power supply connector 103 is arranged on said internal surface 31.

However, each first electric power supply connector 103 can be arranged on the internal surface 31 of said lid 3B, without departing from the invention.

A supporting element 312 is arranged inside said container 3 and connected to said internal surface 31, in wherein said supporting element 312 is equipped with a respective seat (not shown) for receiving the roller 25 of a respective gluing device 2, so as to block the respective gluing device 2 on said supporting element 312.

When the gluing device 2 is inserted inside the container 3 of the cart 1, said gluing device 2 is perpendicular or substantially perpendicular to said supporting element 312.

Advantageously, said cart 1 comprises an inert gas supplying device 6, for supplying at least one inert gas inside said container 3, to avoid the glue contained in the gluing devices from being subjected to a curing process.

In the embodiment that is described, said supplying device is a dry air supplying device.

By dry air is meant air with a relative humidity percentage lower than 30%, preferably lower than 18%, even more preferably lower than 10%.

In the embodiment that is described, said dry air supplying device is arranged outside said container 3.

In particular, said dry air supplying device 6 has at least one portion in contact with the external surface 32 of the container 3.

However, said dry air supplying device 6 can be arranged inside the container 3, without departing from the scope of the invention.

Alternatively, or in combination with said dry air supplying device 6, said cart 1 can comprise a depression generation device (not shown) for generating a depression inside said container 3, such as for example a vacuum pump.

In the case of said cart 1 comprises both a depression generation device and a dry air supplying device, it is preferable that first a vacuum condition is generated inside the container 3 and then a quantity of dry air is introduced into the container 3.

Furthermore, said cart 1 can be equipped with humidity detection means 37, for detecting a relative humidity value inside said container 3 (figure 4).

Said humidity detection means 37 comprise at least one humidity sensor.

Said humidity detection means 37 are arranged inside the container 3.

In particular, in the embodiment that is described, said humidity detection means 37 are arranged on the internal surface 31 of the container 3.

Furthermore, said cart 1 can be equipped with further temperature detection means 39, for detecting an internal temperature value of said container 3 (figure 4).

Said further temperature detection means 39 comprise at least one temperature sensor.

Said further temperature detection means 39 are arranged inside the container 3.

In particular, in the embodiment that is described, said further temperature detection means 39 are arranged on the internal surface 31 of the container 3.

Furthermore, said cart 1 is equipped with moving means to be moved by an operator.

For example, said moving means can comprise a plurality of wheels.

However, it is not necessary that said cart 1 is equipped with said moving means (intended as the aforementioned wheels), but it can be moved by external devices, such as for example a forklift or other devices equipped with wheels.

According to the invention, the cart 1 comprises an electrical connection 28 (arranged inside the container of the cart 1) for connecting said heating means 22 of said gluing device 2 to a power supply network through said power supply unit, and a first actuator, by means of which it is possible to heat said gluing device 2.

In the embodiment that is described, said first actuator comprises a switching device R, arranged inside said container 3.

However, said switching device R can be arranged outside said container 3, without departing from the scope of the invention.

Said switching device R is configured to switch from an open state, in which said switching device R interrupts the passage of electric current from said power supply network towards said heating means 22, to a closed state, in which said switching device R allows the passage of electric current from said power supply network towards said heating means 22, and vice versa.

In the embodiment that is described, said switching device R is a power contactor.

Furthermore, in the embodiment that is described, said cart 1 comprises a second actuator, by which it is possible to heat said container 3, in particular the internal volume of said container 3.

Said second actuator comprises a heating device 30, arranged inside said container 3.

However, the presence of said heating device 30 inside the container 3 is not necessary.

In fact, said heating device 30 can be positioned, if necessary, inside said container 3.

In particular, said power supply unit comprises second power supply means for supplying said heating device 30.

Said second power supply means comprise a second electric power supply connector 104.

In the embodiment that is described, said second power supply means are arranged inside said container 3, in particular on said supporting element 312.

However, said second power supply means can be arranged on the internal surface 31 of said lid 3B, or in general on said lid 3B, without departing from the invention.

In particular, in the embodiment that is described, said heating device 30 is a resistor.

Coming back to the control system S, figure 4 shows the main components of the control system S.

As already said, the control system S is positioned outside the cart 1 just for a better understanding of the invention.

In fact, the control system S is included in a control panel 121 of the cart 1.

Said control system S comprises a logic control unit S1, which can be connected or connectable to said switching device R and configured for:
∘ acquiring said gluing device 2 internal temperature value, by means of said temperature detection means 24, arranged inside said gluing device 2,
∘ controlling the switching of said switching device R, so that the switching from said closed state to said open state is carried out based on the temperature value acquired by said temperature detection means 24.

Furthermore, said control system S comprises storage means S2, in which one or more ranges of melting temperature values are stored, each of which is associated with a respective type of glue.

For example, the type of glue can depend on the type of wood of the workpiece.

Said logic control unit S1 is connected or connectable to said storage means S2 and configured for:
∘ selecting a range of melting temperature values associated with the glue contained in the gluing device 2,
∘ maintaining said switching device R in said closed state, until the internal temperature value of said gluing device 2 falls within said range of said melting temperature values associated with the glue contained in said gluing device 2.

Furthermore, one or more predetermined heating programs can be stored in said storage means S2, each of which is associated with a respective type of glue, and said logic control unit S1 can be configured to execute at least one predetermined heating program.

The storage of predetermined heating programs eases the operations of an operator who, based on the type of machining to be performed on a workpiece, can easily select a predetermined heating program among those stored.

In particular, said logic control unit S1 can be programmed to command the opening and closing of said switching device R at predetermined times.

Said cart 1 comprises further temperature detection means 39 for detecting the internal temperature value of said container 3, arranged inside said container 3, and said logic control unit S1 can be connected or connectable to said further temperature detection means 39, and to said heating device 30, and configured for:
∘ acquiring the internal temperature value of said container, by means of said further temperature detection means 39,
∘ controlling the power supply of said heating device 30 on the basis of the temperature value acquired by said further temperature detection means 39.

In particular, said logic control unit S1 can be configured for:
∘ selecting a range of melting temperature values associated with the glue contained in the gluing device 2,
∘ powering said heating device 30, until the value of said internal temperature of said container 3 falls within said range of melting temperature values associated with the glue contained in said gluing device 2.

In general, predetermined data associated with said gluing device 2 and/or respective further predetermined data associated with a respective predetermined type of glue and/or predetermined reference temperature values associated with said gluing device 2 and/or further predetermined reference temperature values associated with said container 3 can be stored in said storage means S2.

Said cart 1 can comprise a motor (not shown), preferably an electric motor, connectable to the roller 25 of the gluing device 2, in order to rotate said roller 25 for applying the glue on a workpiece (i.e., to allow the outflow of the glue from the gluing device 2).

In particular, said motor is configured to rotate in a first direction or in a second direction, opposite to said first direction.

Said logic control unit S1 is connected or connectable to said motor and configured to send to said motor a signal to rotate said motor in said first direction or in said second direction, so that said roller 25 rotates in said first direction, or said second direction.

As mentioned above, said cart 1 can comprise a depression generation device for generating a depression inside said container 3.

In this case, the logic control unit S1 can be connected or connectable to said depression generation device, and configured to activate/deactivate said depression generation device.

Furthermore, always as mentioned above, said cart 1 can comprise a dry air supplying device 6, for supplying dry air inside said container 3.

In this case, the logic control unit S1 can be connected or connectable to said dry air supplying device 6 and configured to activate/deactivate said dry air supplying device 6.

Furthermore, said logic control unit S1 can be connected or connectable to said humidity detection means 37 (arranged inside said container 3), and one or more predetermined humidity values can be stored in said storage means S2.

Said logic control unit S1 can be configured for:
∘ acquiring said relative humidity value from said humidity detection means 37,
∘ comparing said relative humidity value with a predetermined humidity value, to check whether said relative humidity value is greater or lower than said predetermined humidity value,
∘ when said relative humidity value is greater than said predetermined humidity value, increasing the supplying time of dry air inside said container 3 until said predetermined humidity value is reached, and when said relative humidity value is lower than said predetermined humidity value, decreasing the supplying time of dry air inside said container 3 until said predetermined humidity value is reached.

In said storage means S2, one or more predetermined temperature values can be stored, and said logic control unit S1 can be configured for:
∘ acquiring a temperature value from said further temperature detection means 39,
∘ comparing said temperature value with a predetermined temperature value, to check whether said temperature value is greater than said predetermined temperature value,
∘ increasing/decreasing the supplying time of dry air inside said container 3, until a predetermined humidity value is reached, based on the measured temperature value.

Furthermore, as shown in figure 4, said control system S comprises a receiver module S3, for receiving a command signal from a mobile electronic device D, thus said cart 1 is remotely controlled by an operator through said mobile electronic device D.

Said mobile electronic device D can be a smartphone or a tablet or a computer.

Advantageously, in this way, the physical presence of an operator near the cart 1 is not necessary.

Said logic control unit S1 is connected or connectable to said receiver module S3 and configured to acquire said command signal, i.e., the information contained in said command signal.

Said control system S also comprises a transmission module S4 to allow the logic control unit S1 to transmit a respective signal to said switching device R and/or to said depression generation device and/or to said dry air supplying device 6 and/or to said electric motor and/or to said first pneumatic cylinder to open/close said shutter and/or to said second pneumatic cylinder to open/close said dispenser.

Once the logic control unit S1 has received a command signal from the mobile electronic device D, it is configured to send a respective signal, according to the information contained in the command signal sent from said mobile electronic device D.

Furthermore, said control system S comprises power supply means S5 for supplying said control system S, i.e., said logic control unit S1, said storage means S2, said receiver module S3 and said transmission module S4.

With reference to the cart 1 object of the invention, the operator can control the heating process of the glue contained in a gluing device by means of said control system S, both manually as well as remotely.

In order that an operator can manually control the glue heating process, said cart 1 is equipped with a control panel 121, in which said control system S is included (as mentioned above).

Said control panel 121 is equipped with a plurality of buttons and/or display means 120 for displaying data that can be associated with the gluing device 2 (for example the temperature of the gluing device 2, the type of glue present in said gluing device, the melting temperature of said glue, etc.) and/or with the container 3 (for example, the relative humidity inside the container 3, the internal temperature of the container 3, etc.).

In the embodiment that is described, said display means 120 comprise a display.

Furthermore, the control panel 121 is arranged on said storage and heating unit 11.

In other words, both manually and through the aid of a mobile electronic device, it is possible to allow the passage of an electric current from the power supply unit towards said heating means 22, for heating the quantity of glue in each gluing device 2 until said quantity of glue reaches its own melting temperature.

When the switching device R is in a closed state, said heating means 22 are connected to the power supply unit, and an electric current flows from the power supply network to the gluing device 2, so that the glue is heated by the passage of an electric current in the gluing device 2, by means of said heating means 22.

When the glue has reached the melting temperature and therefore has passed from a solid-state to a liquid state (to be applied to a surface of a workpiece), the container 3 is open and the gluing device 2 is extracted.

### Advantages

A first advantage of the cart according to the present invention consists in the fact that said cart 1 is equipped with a control system S for automating the heating process of a quantity of glue contained in a gluing device 2, so as to save time, avoiding that an operator has periodically to check the state of the glue contained in said gluing device.

A second advantage is given by the fact that it is possible to store one or more heating programs according to the type of glue contained in a gluing device.

Furthermore, a further advantage is given by the fact that said control system S can be activated manually or remotely.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Cart (1) for storing and heating at least one gluing device (2), wherein said gluing device (2) is of the type comprising a receptacle (21) containing a quantity of solid glue, heating means (22) for heating said quantity of glue, temperature detection means (24) for detecting the internal temperature value of said gluing device (2), said cart (1) comprising:
- a container (3) for containing said at least one gluing device (2),
- a first actuator (R) to heat said gluing device (2) and/or a second actuator (30) to heat said container (3), wherein said second actuator (30) is positioned inside said container (3);
- a control system (S) comprising a logic control unit (S1) connected to said first actuator (R) and/or to said second actuator (30);
said logic control unit (S1) being configured to activate/deactivate said first actuator (R) and/or said second actuator (30).

2. Cart (1) according to the previous claim **characterized**
**in that**
said cart (1) comprises:
an electrical connection (28) for connecting said heating means (22) of said gluing device (2) to a power supply network,
**in that**
said first actuator (R) comprises a switching device (R) arranged on said electrical connection (28) and configured to switch from an open state, wherein said switching device (R) interrupts the passage of electric current from said power supply network to said heating means (22), in a closed state, wherein said switching device (R) allows the passage of electric current from said power supply network to said heating means (22), and vice versa,
**in that**
said logic control unit (S1) is configured to:
∘ acquire said internal temperature value of said gluing device (2), trough said temperature detection means (24),
∘ control the switching of said switching device (R) so that the switching from said closed state to said open state is carried out on the basis of the temperature value acquired by said temperature detection means (24).

3. Cart (1) according to any one of the previous claims, **characterized in that** said control system (S) comprises storage means (S2) in which at least one or more ranges of melting temperature values, each of which is associated with a respective type of glue, and/or one or more predetermined values of humidity and/or one or more predetermined temperature values are stored, and said logic control unit (S1) is connected or connectable to said storage means (S2).

4. Cart (1) according to the previous claim, **characterized in that**, when one or more ranges of melting temperature values are stored in said storage means (S2), said logic control unit (S1) is configured to:
∘ select a range of melting temperature values associated with the glue contained in the gluing device (2),
∘ keep said switching device (R) in said closed state until the value of said internal temperature falls within said range of melting temperature values associated to the glue contained in said gluing device (2).

5. Cart (1) according to any one of the previous claims, **characterized in that** said second actuator (30) comprises a heating device (30) for heating the internal volume of said container (3) and **in that** said logic control unit (S1) is connected or connectable to said heating device (30).

6. Cart (1) according to any one of the previous claims, **characterized in that** said cart (1) comprises further temperature detection means (39) for detecting the internal temperature value of said container (3), wherein said further temperature detection means (39) are arranged inside said container (3), and said logic control unit (S1) is connected or connectable to said further temperature detection means (39).

7. Cart (1) according to claim 6, when depending of claim 5, **characterized in that** said logic control unit (S1) is configured to:
∘ acquire the internal temperature value of said container (3), by means of said further temperature detection means (39),
∘ control the power supply of said heating device (30) based on the temperature value acquired by said further temperature detection means (39).

8. Cart (1) according to the previous claim, when depending on claim 3, **characterized in that**, when one or more ranges of melting temperature values are stored in said storage means (S2), said logic control unit (S1) is configured to:
∘ select a range of melting temperature values associated with the glue contained in the gluing device (2),
∘ supply power to said heating device (30) until the value of said internal temperature of said container (3) falls within said range of melting temperature values associated to the glue contained in said gluing device (2).

9. Cart (1) according to any one of the previous claims, **characterized**
**in that**
said cart (1) comprises a motor connectable to a roller (25) of said gluing device (2),
**in that**
said logic control unit (S1) is connected or connectable to said motor and configured to send a signal to said motor to rotate said motor in a first direction or in a second direction, opposite to said first direction, so that said roller (25) rotate in said first direction or said second direction.

10. Cart (1) according to any one of the previous claims, **characterized**
**in that**
said cart (1) comprises a depression generation device for generating a depression inside said container (3),
**in that**
said logic control unit (S1) is connected or connectable to said depression generation device and configured to activate/deactivate said depression generation device.

11. Cart (1) according to any one of the previous claims, **characterized**
**in that**
said cart (1) comprises an inert gas supplying device (6) for supplying at least one inert gas inside said container (3),
**in that**
said logic control unit (S1) is connected or connectable to said inert gas supplying device (6) and configured to activate/deactivate said inert gas supplying device (6).

12. Cart (1) according to the previous claim, when depending of claim 3, **characterized**
**in that**
said cart (1) comprises humidity detection means (37) for detecting a relative humidity value inside said container (3), arranged inside said container (3) and said logic control unit (S1) is connected or connectable to said humidity detection means (37),
**in that**
when one or more predetermined humidity values are stored in said storage means (S2), said logic control unit (S1) is configured to:
∘ acquire said relative humidity value from said humidity detection means (37),
∘ compare said relative humidity value with a predetermined humidity value, to verify if said relative humidity value is greater or less than said predetermined humidity value,
∘ when said relative humidity value is greater than said predetermined humidity value, increase the time of supplying said inert gas inside said container (3) until said predetermined humidity value is reached, and when said relative humidity value is less than said predetermined humidity value, decrease the time of supplying said inert gas inside said container (3) until said predetermined humidity value is reached.

13. Cart (1) according to the previous claim, when depending on claim 6, **characterized in that**, when one or more predetermined temperature values are stored in said storage means (S2), said logic control unit (S1) is configured to:
∘ acquire a temperature value from said further temperature detection means (39),
∘ compare said temperature value with a predetermined temperature value to verify if said temperature value is greater than said predetermined temperature value,
∘ increase/decrease the time of supplying dry air inside said container (3) until a predetermined humidity value is reached, based on the detected temperature value.

14. Cart (1) according to any one the previous claims, **characterized in that** said control system (S) comprises a receiver module (S3) for receiving a command signal from a mobile electronic device (D) and **in that** said logic control unit (S1) is connected or connectable to said receiver module (S3) and is configured to acquire said command signal, so that said control system (S) is remotely controlled through said mobile electronic device (D).

15. Cart (1) according to any one of the previous claims, **characterized in that**, when said gluing device (2) is of the type comprising a first pneumatic cylinder for opening/closing a shutter in order to allow/prevent the passage of a quantity of glue from said receptacle (21) to a roller (25) of said gluing device (2) and a second pneumatic cylinder for opening/closing a dispenser in order to adjust the quantity of glue that goes from said receptacle (21) to said roller (25), said logic control unit is configured to send a respective signal to said first pneumatic cylinder to open/close said shutter and to said second pneumatic cylinder to open/close said dispenser.

16. Cart (1) according to any one of the previous claims, **characterized in that** said cart (1) comprises a control panel (121) provided with a plurality of buttons and/or display means (120) for displaying at least data associated with the gluing device (2) and/or data associated with the container (3) and **in that** said control panel (121) is connected or connectable to said control system (S).
